# EUROPEAN PATENT SPECIFICATION

(11) **EP 0 868 272 B1**
(45) Date of publication and mention of the grant of the patent: **21.08.2002**
(21) Application number: 96943109.7
(22) Date of filing: 03.12.1996
(51) Int. Cl.: B28B 21/94

(54) **IMPROVED PROCESS AND EQUIPMENT FOR LINING CONCRETE PIPES**
VERBESSERTES VERFAHREN UND VORRICHTUNG ZUM AUSKLEIDEN VON BETONRÖHREN
PROCEDE ET MATERIEL AMELIORES SERVANT A CHEMISER DES TUBES EN BETON

(30) Priority: 05.12.1995 IT MI952547
(43) Date of publication of application: 07.10.1998
(73) Proprietor: ASSOTUBI ECOLOGICA S.r.l., I-22044 Inverigo, Como (IT)
(72) Inventor: BOSISIO, Sergio, I-22044 Inverigo (IT)
(74) Representative: Riccardi, Sergio
(86) International application number: EP9605586
(87) International publication number: WO97020668

(56) References cited:
- CA-A- 1 211 620
- DE-A- 1 646 760
- DE-A- 3 029 674
- GB-A- 489 298
- US-A- 3 206 821

## Description

The present invention relates to a process and the relative equipment by which turbocentrifuged or vibrated concrete pipes can be lined with polyurethanic, epoxydic, bisphenolic, isophthalic resins and the like, the said pipes being traditionally used for carrying sewage or other highly acidic substances and for irrigation and pressurized water pipelines.

It is known from EP 0386428 B1 issued to the same applicant of this application, to line concrete pipes used for making sewers and the like.

Particularly the above mentioned european patent teaches an effective process and the relative proper equipment for lining the above pipes and their connections for avoiding that, during the use thereof, leakages can occur. In the process disclosed in the above european patent, there is a die provided with a mobile sector and mobile flanges on which a binding of antiacid glass cloth, a layer of glass wool, a pad and finally a glass cloth are placed. After inserting such a die into the concrete pipe, bisphenolic resins and the like are injected and, upon their solidification, the mobile parts of the die are disassembled and said die is withdrawn.

While the disclosed process is quite and completely effective, it is rather time consuming and thus not always economically convenient.

The present invention simplifies some aspects of the above mentioned process and equipment, further providing for the use of more economic and effective materials and, in other words, achieves results that are comparable to those achieved before with costs and time remarkably reduced.

The main object of the present invention is to provide a new process for lining headers of sewage pipes and the like by injecting proper resins while providing a perfect seal between two fitted pipes so lined with reduced time and costs.

The above set forth purpose is brilliantly obtained by a process and the relative equipment according to the present invention for lining headers of concrete pipes, having the features set forth in the characterizing part of claims 1 and 4, respectively. Further advantageous features of such process and equipment are recited in the respective dependent claims.

The features, the objects and the advantages of the present invention will be certainly clear from the following detailed description to be read referring to the annexed sheets of drawings, in which:
- Figure 1 is a side view of a concrete pipe section used for making sewage pipes or the like;
- Figure 2 shows a longitudinal sectional view, enlarged in comparison to Fig. 1, of a first embodiment of male/female flanges used for the lining of the respective pipe headers;
- Figure 3 is a sectional view of the male/female fit of the lined headers according to the first embodiment;
- Figure 4 shows a partial longitudinal sectional view, enlarged in comparison to Figure 1, of a second embodiment of male/female flanges used for lining the respective headers of the concrete pipes or the like;
- Figure 5 is a detail view of the male flange of the second embodiment provided with a proper seal member;
- Figure 6 is a sectional view of the male/female fit of the headers lined according to the second embodiment;
- Figure 7 is a longitudinal partial sectional view, enlarged in comparison to Figure 1, of a third embodiment of male flange and female header of a concrete pipe;
- Figure 8 is a longitudinal sectional view of the male/female fit according to the third embodiment;
- Figure 9 shows through a longitudinal diagrammatic view how to obtain a proper positioning, with proper tension rods, of male/female flanges without using a caisson;
- Figure 9A, 9B, 9C show the transversal bar arrangement at the ends in the arrangement of Figure 9; and
- Figures 10A, 10B show the use of proper seal elements, Figures 10A and 10B being in different scales.

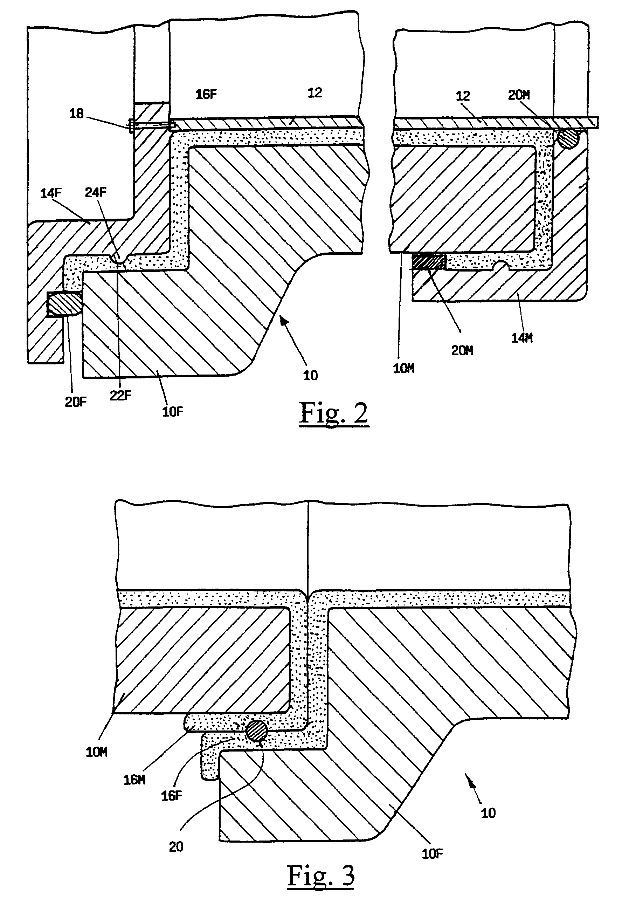

It is remarked that the embodiments as shown in the figures 2 to 6 do not form part of the invention.

In the various figures, for easiness, similar or equivalents elements have been indicated by the same reference characters; the addition of a letter "M"means that it refers to a male part while the addition of a letter "F" means that it is referred to the female part.

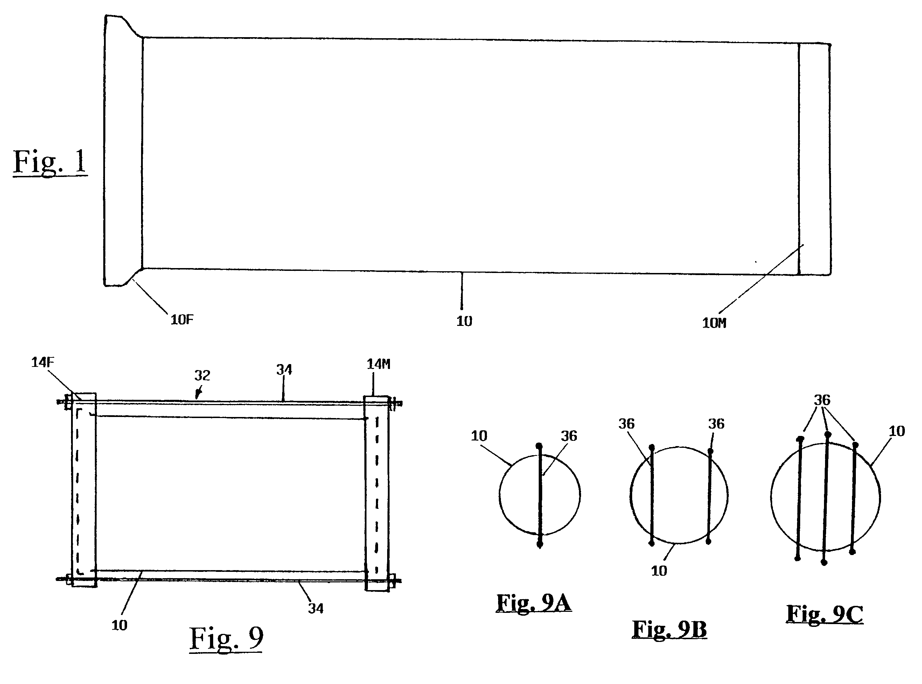

Referring to the various figures of the drawings, Figure 1 diagrammatically shows a side view of a concrete pipe section 10 to be lined. The process according to the present invention provides for inserting a caisson 12 into the pipe 10, said caisson being fundamentally constituted by a truncated cone made under very tight tolerances and with a very low taper, preferably in the order of some mm for a length of 2 or 3 m; then clamping one or more properly shaped flanges 14 to the ends of the said caisson; injecting a proper epoxydic or polyurethanic resin 16 and, after the solidification thereof, disassembling the flange or flanges and withdrawing the caisson. It is also possible to clamp one of the flanges to the caisson and introduce it into the pipe to be lined.

In the first embodiment the resinous lining is laid along all the pipe length and also on the male 10M and female 10F headers. The flange 14F of the female header 10F is clamped to the caisson 12 through bolts 18 or the like and proper seal elements 20F are provided between the inner surface of header 14F and the external surface of the flange 14F end. In this embodiment a cavity 22F for O-ring with a proper protuberance 24F in the flange 14F is also provided in the resinous lining (a corresponding cavity 22M is also provided in the resinous lining of the male header with a proper protuberance 24M).

At the male header part, the caisson 12 projects beyond the end of the pipe to be lined. Proper seal means, such as gaskets or O-rings 20M provide for seal against the leakage of resin. Proper tension rod means, not shown, provide the right positioning of flange 14M with respect to caisson 12. Figure 3 shows the fit of the male header of pipe 10 inserted in the female header of another pipe 10 according to this first embodiment.

The second embodiment is similar to the first embodiment but in this case the resinous lining 16F of the female header is smooth, i.e. without cavity 22F as in the first embodiment.

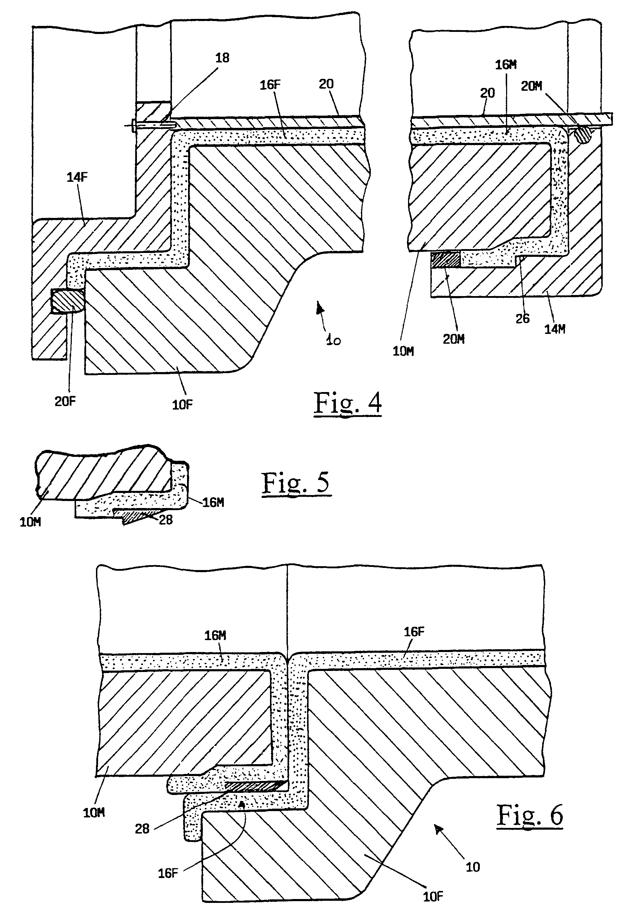

As far as the lining 16M of the male header is concerned, this is provided with a step 26 obtained at a lightly tapered end in the concrete pipe 10 (Fig. 4). In such a step, a proper seal element or gasket 28, shaped as an arrow, is accommodated (Fig. 5).

Figure 6 shows the male/female fit in this second embodiment.

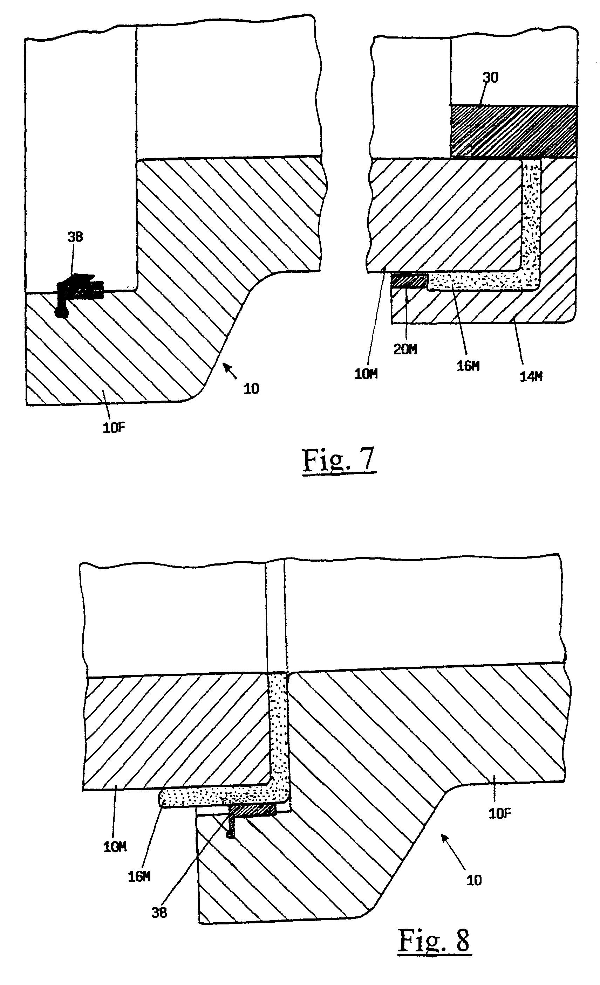

Figure 7 represents a third embodiment of male/female fit according to the present invention. In this embodiment the female header 10F has no lining but it is provided, for example, with a special gasket 38, already known in the art, which is "buried" into the header itself during the concrete casting. The male header 10M, on the contrary, is lined with resin 16M but is smooth, in other words without cavities 22M for O-rings and without steps 26 for the gasket 28. Also in this case a perfect fit seal between male and female is achieved.

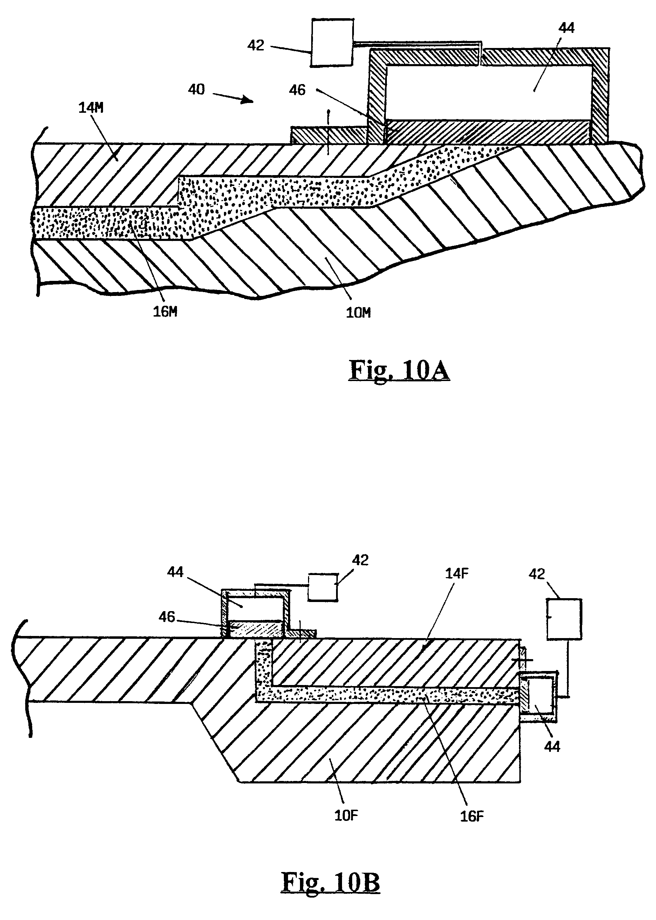

In order to line with resin only the headers of a concrete pipe (Figure 7) and not its whole inner surface, a proper flange which is not clamped to the inner caisson (in this case there is no caisson because it would be unnecessary) and provided with a proper seal 30 preventing leakage of resin injected beyond the header area (see Figure 8) is used. Similar flanges could be used for making linings according any of the above described embodiments (even if not specifically shown).

While, to the aim of clarity and easiness, in the various figures the gaskets have been always shown as O-rings or the like, one skilled in the art will realize that they could be of any different design.

Referring for example to Figure 10A, in order to obtain a lining having a design as shown in Figures 4 and 5, in addition to a properly shaped concrete pipe 10, an expansible gasket 40 connected to the die or flange 14M is used.

Indeed a proper bladder 44, connected to air feeding means 42 when inflated, moves a rubber plug or the like towards the surface to be sealed.

Figure 10B shows such an expansible gasket 40 mounted on another end of the pipe 10.

In order to obtain a correct positioning of the headers, the use of a proper arrangement 32 of threaded tension rods 34 (diagrammatically shown in Figure 9) in order to move one flange close to another is provided. According to the cross-sectional dimension of the pipe to be used, one, two, three or more transversal bars 36 could be used at the headers (see Figures 9A, B, C). However it will be realized that the method here proposed for positioning the flanges without caisson is just one of the possible arrangements for doing it. Conventionally, during the resin injection particularly using the caisson, both the pipe and the equipment are inclined at an angle between 5 and 30 degrees in order to accommodate the flow of the resin itself.

As it will be now clear in view of the above description, the present invention provides complete or partial lining of sewage pipes and the like such lining being carried out by injecting epoxydic or polyurethanic resins or the like thus providing a perfect seal between two fitted pipes with reduced time and costs.

While a plurality of embodiments according to the present invention have been described and claimed, it is clear that they have been provided just for exemplificative but not limiting purposes. Changes, additions, combinations, substitutions of elements and arrangements with others functionally similar being possible, the scope of the invention being determined only by the appended claims. Particularly, in addition to the materials cited in the above description, other resin-like materials could be used with or without fiber reinforcement.

## Claims

1. Process for lining at least one header of concrete pipes consisting of the following steps: placing at least one flange (14F, 14M), provided with sealing elements (20M, 30, 38) within at least a corresponding header (10F, 10M) providing a gap between them; providing an arrangement of threaded tension rods; tightening such an arrangement in order to obtain a correct positioning of the headers; injecting resin within said gap; and, after solidification of the resin, withdrawing the at least one flange (14F, 14M) after untightening the arrangement of threaded tension rods.

2. Process according to claim 1, **characterized in that** said resin is chosen in the group of epoxydic, polyurethanic, bisphenolic or isophthalic resins.

3. Process according to any of the claims 1 or 2 **characterized in that** during the resin injection, the pipe to be lined and the entire equipment therefor are inclined at an angle between 5 and 30° degrees.

4. Equipment for carrying out the process according to claim 1, comprising a flange (14F) for female header (10F) and a male flange (14M), said flanges being provided with sealing means, **characterized in that** said arrangement (32) of threaded tension rods (34) is comprised of two or more longitudinal tension rods (34) and one or more corresponding transversal bars (36) bearing against said flanges (14F, 14M).

5. Equipment according to claim 4, **characterized in that** said flanges (14F, 14M) further comprise a protuberance (24F, 24M) protruding outwardly in order to provide a cavity (22F, 22M) for a sealing ring in the resin lining (16F, 16M).

6. Equipment according to any of claims 4 or 5, **characterized in that** said flanges (14F, 14M) further comprise a sealing element or gasket (20F, 20M) in order to prevent the leakage of the injected resin.

7. Equipment according to any of the claims 4-6, **characterized in that** said flanges (14F, 14M) are clamped to the caisson (12) through threaded elements (18).

8. Equipment according to any of the claims 4-7, **characterized in that** said male flange (14M) has a circumferentially extending step for providing in the corresponding lining (16F) a corresponding circumferentially extending step (26) for placing an annular arrow shaped sealing element (28).

9. Equipment according to any of claims 4-6, 8, **characterized in that** said flanges (14F, 14M) have further sealing elements (30F, 30M), respectively, preventing the leakage of resins along the pipe when desired.

10. Equipment according to any of claims 4-9, **characterized in that** at least a sealing element (40) expansible according to the fluid pressure is provided.

11. Equipment according to claim 10, **characterized in that** said element (40) is provided with a pressurizable chamber (44), pressurizing means (42) and sealing means (46), said element (40) being connectable to said flanges.

## Patentansprüche

1. Verfahren zum Auskleiden mindestens eines Kopfstücks von Betonröhren, mit den folgenden Schritten: Platzieren mindestens eines mit Dichtungselementen (20M, 30, 38) versehenen Flansches (14F, 14M) in mindestens einem entsprechenden Kopfstück (10F, 10M), wobei dazwischen eine Lücke vorgesehen wird; Vorsehen einer Anordnung von Gewinde-Spannstäben; Spannen der Anordnung zum Erreichen einer korrekten Positionierung der Kopfstücke; Einspritzen eines Harzes in die Lücke; und, nach einem Abbinden des Harzes, Herausziehen des mindestens einen Flansches (14F, 14M) nach einem Entspannen der Anordnung von Gewinde-Spannstäben.

2. Verfahren nach Anspruch 1, **dadurch gekennzeichnet, dass** das Harz aus der folgenden Gruppe ausgewählt wird: Epoxidharz, Polyurethanharz, Bisphenolharz oder Isophthalharz.

3. Verfahren nach Anspruch 1 oder 2, **dadurch gekennzeichnet, dass** während der Harzeinspritzung das auszukleidende Rohr und die gesamten dafür nötigen Vorrichtungen in einem Winkel von zwischen 5 und 30° geneigt sind.

4. Vorrichtung zum Durchführen eines Verfahrens nach Anspruch 1, mit einem Flansch (14F) für ein weibliches Kopfstück (10F) und einem männlichen Flansch (14M), wobei die Flansche mit Dichtungselementen versehen sind, **dadurch gekennzeichnet, dass** die Anordnung (32) von Gewindespannstäben (34) aus zwei oder mehr Längsspannstäben (34) und einem oder mehreren entsprechenden Querstäben (36) besteht, die gegen die Flansche (14F, 14M) drücken.

5. Vorrichtung nach Anspruch 4, **dadurch gekennzeichnet, dass** die Flansche (14F, 14M) weiter einen Fortsatz (24F, 24M) aufweisen, der nach außen vorsteht, um einen Hohlraum (22F, 22M) für einen Dichtungsring in der Harzauskleidung (16F, 16M) vorzusehen.

6. Vorrichtung nach einem der Ansprüche 4 oder 5, **dadurch gekennzeichnet, dass** die Flansche (14F, 14M) weiter ein Dichtungselement oder eine Dichtung (20F, 20M) aufweisen, um ein Auslaufen des eingespritzten Harzes zu verhindern.

7. Vorrichtung nach einem der Ansprüche 4 bis 6, **dadurch gekennzeichnet, dass** die Flansche (14F, 14M) durch Gewindeelemente (18) an einen Einsatz (12) geklemmt sind.

8. Vorrichtung nach einem der Ansprüche 4 bis 7, **dadurch gekennzeichnet, dass** der männliche Flansch (14M) eine sich im Umkreis erstreckende Stufe zum Vorsehen einer sich im Umkreis erstreckenden Stufe (26) in der entsprechenden Auskleidung (16F) zum Platzieren eines ringförmigen pfeilförmigen Dichtungselements (28) aufweist.

9. Vorrichtung nach einem der Ansprüche 4 bis 6, 8, **dadurch gekennzeichnet, dass** die Flansche (14F, 14M) gegebenenfalls weitere Dichtungselemente (30F bzw. 30M) aufweisen, die ein Austreten von Harzen entlang des Rohrs verhindern.

10. Vorrichtung nach den Ansprüchen 4 bis 9, **dadurch gekennzeichnet, dass** mindestens ein Dichtungselement (40) vorgesehen ist, das je nach dem angelegten Fluiddruck ausdehnbar ist.

11. Vorrichtung nach Anspruch 10, **dadurch gekennzeichnet, dass** das Element (40) eine Druckkammer (44), eine Druckeinrichtung (42) und eine Dichtungseinrichtung (46) aufweist, wobei das Element (40) mit den Flanschen verbunden werden kann.

## Revendications

1. Procédé pour chemiser au moins un collecteur de tubes en béton se composant des étapes ci-après : placer au moins une bride (14F, 14M), munie d'éléments d'étanchéité (20M, 30, 38) à l'intérieur d'au moins un collecteur correspondant (10F, 10M) en créant un intervalle entre eux ; créer une disposition de tiges de tension filetées ; serrer une telle disposition de manière à obtenir une mise en place correcte des collecteurs ; injecter de la résine à l'intérieur dudit intervalle ; et, après solidification de la résine, retirer cet au moins une bride (14F, 14M) après desserrage de la disposition de tiges de tension filetées.

2. Procédé selon la revendication 1, caractérisé en que ladite résine est choisie dans le groupe des résines époxydique, polyuréthanique, bisphénolique ou isophthalique.

3. Procédé selon une quelconque des revendications 1 ou 2, **caractérisé en ce que**, pendant l'injection de la résine, le tube devant être chemisé ainsi que l'ensemble du matériel correspondant sont inclinés d'un angle entre 5 et 30 degrés.

4. Matériel pour mettre en oeuvre le procédé selon la revendication 1, comprenant une bride (14F) pour collecteur femelle (10F) et un collecteur mâle (14M), lesdites brides étant munies de moyens d'étanchéité, **caractérisé en ce que** ladite disposition (32) de tiges de tension filetées (34) est composée de deux tiges de tension longitudinales (34) ou davantage et d'une ou plusieurs barres transversales correspondantes (36) portant contre lesdites brides (14F, 14M).

5. Matériel selon la revendication 4, **caractérisé en ce que** lesdites brides (14F, 14M) comprennent en outre une protubérance (24F, 24M) faisant saillie vers l'extérieur de manière à créer une cavité (22F, 22M) pour une bague d'étanchéité dans le chemisage de résine (16F, 16M).

6. Matériel selon une quelconque des revendications 4 ou 5, **caractérisé en ce que** lesdites brides (14F, 14M) comprennent en outre un élément ou un joint d'étanchéité (20F, 20M) de manière à empêcher la fuite de la résine injectée.

7. Matériel selon une quelconque des revendications 4 à 6, **caractérisé en ce que** lesdites brides (14F, 14M) sont serrées au caisson (12) par l'intermédiaire d'éléments filetés (18).

8. Matériel selon une quelconque des revendications 4 à 7, **caractérisé en ce que** ladite bride mâle (14M) présente un gradin s'étendant circonférentiellement pour créer, dans le chemisage correspondant (16F), un gradin correspondant s'étendant circonférentiellement (26) pour placer un élément d'étanchéité en forme de flèche annulaire (28).

9. Matériel selon une quelconque des revendications 4 à 6 et 8, **caractérisé en ce que** lesdites brides (14F, 14M) présentent, respectivement, des éléments d'étanchéité supplémentaires (30F, 30M) en empêchant la fuite de résines le long du tube lorsque cela est souhaité.

10. Matériel selon une quelconque des revendications 4 à 9, **caractérisé en ce qu'**on prévoit au moins un élément d'étanchéité (40) pouvant se dilater selon la pression du fluide.

11. Matériel selon la revendication 10, **caractérisé en ce que** ledit élément (40) est muni d'une chambre pouvant être mise sous pression (44), des moyens de mise sous pression (42) et des moyens d'étanchéité (46), ledit élément (40) pouvant être relié auxdites brides.
